(19) Europäisches Patentamt / European Patent Office / Office européen des brevets

(11) **EP 2 634 210 B1**

(12) **EUROPEAN PATENT SPECIFICATION**

(45) Date of publication and mention
of the grant of the patent:
**26.09.2018 Bulletin 2018/39**

(21) Application number: **12157978.3**

(22) Date of filing: **02.03.2012**

(51) Int Cl.:
***C08J 9/08*** *(2006.01)*　　***C08J 9/12*** *(2006.01)*
***B29C 44/22*** *(2006.01)*

(54) **Process for manufacturing a plastic composite profile**

Verfahren zur Herstellung eines Kunststoffverbundmaterialprofils

Procédé de fabrication d'un profilé composite en plastique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.09.2013 Bulletin 2013/36**

(60) Divisional application:
**18185623.8**

(73) Proprietor: **Orac Holding NV
8400 Oostende (BE)**

(72) Inventor: **Cottyn, Johan
8490 Jabbeke (BE)**

(74) Representative: **IPLodge bvba
Technologielaan 9
3001 Heverlee (BE)**

(56) References cited:
**EP-A1- 1 484 149　　DE-A1- 4 432 111
GB-A- 1 439 438　　US-A- 5 360 281**

## Description

## Technical field of the invention

The present invention relates to the production of composite styrenic profiles having a core and an outer layer and to apparatus for implementing said method.

## Background of the invention

High density foamed polystyrene profiles of 500 kg/m$^3$ or higher are well known in the art of building decoration. They can be produced with sharp edges and smooth surfaces. However, for most applications, it is not required that the density of the profile be the same all through the cross-section of the profile. Obtaining a core of lower density permits to reduce costs without changing the external visual appearance of the profile.

Post-coextruded polystyrene profiles are present on the market. They combine a low density foamed core and a high density non-foamed skin. The skin is applied after the core has exited the calibration unit. These profiles however are prone to delamination in some circumstances. Also, the post-coextrusion process has the disadvantage to involve re-heating of the core prior to the post-coextrusion die. This re-heating tends to cause a lower dimensional stability which can lead to deformations when tensions are released.

GB1439438A discloses a method of producing laminates comprising at least two layers of foamed polymeric material, the layers being of different densities, which comprises combining at an extrusion die, as herein defined, at least two streams of molten polymer composition containing a blowing agent and at least one of which streams contains an active nucleating agent, to form the laminate, at least one of the streams containing a smaller amount of active nucleating agent than the other stream or streams.

EP 1484149A discloses a method of manufacturing solid profiles, hollow or open, particularly those having sharp edges based on polystyrene, comprising the following steps: dosing of polymer comprising polystyrene and optionally other additives and adjuvants, plasticizing the components in an extruder to obtain a homogeneous mixture, injecting a pressurized gas via an injection port, kneading and pressurizing said homogeneous mixture and gas until complete dissolution of the gas to obtain a single phase mixture, gradually cooling said single phase mixture to maintain the pressure required for solubilizing the gas, passing said single phase mixture into a shaping tool to form a foam, passing the foam thus formed through an optionally temperature-controlled calibration system, motorized drawing of the calibrated foam.

DE 4432111A discloses a process for the manufacture of a plastic foam with a fluoro-chloro-hydrocarbon-free blowing agent, particularly with a high vapour-pressure physical blowing agent such as $CO_2$ and $N_2$ or inert gases, characterised by a known coextrusion, wherein a blowing agent core (6) and an outer layer are foamed and a different blowing agent is used for the material core than for the outer layer.

US 5,360,281A discloses a cosmetic pencil barrel composition consisting essentially of a thermoplastic material selected from the group consisting of polyvinyl chloride (PVC) in combination with a PVC stabilizer, poly(N-vinylpyrrolidone), cellulose acetate, urethane polymers, synthetic elastomers, natural rubber, polyethylene, polypropylene, polystyrene, and mixtures thereof, a foaming agent, a lubricant, a pigment, a nucleating filling component, and an acrylic impact modifier; wherein the barrel composition exhibits linear cellular formation and the inner surface of the barrel is scored to increase adherence of the cosmetic marking material which is made by a method comprising the steps of: (a) mixing a molten thermoplastic composition comprising a foamable thermoplastic material selected from the group consisting of polyvinyl chloride (PVC) in combination with a PVC stabilizer, poly(N-vinylpyrrolidone), cellulose acetate, urethane polymers, synthetic elastomers, natural rubber, polyethylene, polypropylene, polystyrene, and mixtures thereof; a foaming agent, a lubricant, a nucleating filler component, and an acrylic impact modifier, (b) extruding the mixture of step (a) through a crosshead die to form a continuous tubular extrudate, (c) introducing the tubular extrudate into a cooled water bath within a vacuum chamber through a calibrator designed to control foaming of the tubular extrudate, (d) cutting the cooled tubular extrudate into the desired pencil length.

Also known is the Co-extrusion Celuka process wherein a hollow extrudate leaves an extrusion head for a directly adjacent cooled calibration unit, wherein 1) the die lip of the extrusion head has the same cross-section as the entry of the calibration unit, 2) in the calibration unit, the cavity within the hollow extrudate get filled by a foaming process operating from the inner border of the cavity to the center of the cavity, and 3) the outer surface of the extrudate remains non-foamed due to the surface cooling effect of the calibration unit, thereby forming a skin on the foamed profile. This process however has several drawbacks. First, when applied to polystyrene, it cannot easily achieve average core densities lower than 350 g/1 due to coalescence of the cells in the center of the cavity's cross-section. Second, the density of the foam is non-uniform through the core cross-section with smaller cells closer to the inner border and larger cells closer to the center, reducing its similarity to quality materials such as wood or plaster. Third, the skin of the profile is shiny and plastic like, also reducing its similarity to quality materials such as wood or plaster.

There is therefore a need in the art for new methods and apparatus permitting to overcome one or more limitations of the prior art listed above.

## Summary of the invention

It is an object of the present invention to provide good apparatus or methods for providing plastic composite profiles having a foamed core of density lower than 400 Kg/m$^3$ surrounded by an outer layer of density higher than 500 Kg/m$^3$.

An advantage of embodiments of the present invention is that it permits the manufacturing of such plastic composite profiles without risk of delamination between the core and the outer layer.

Another advantage of embodiments of the present invention is that it permits the obtaining of plastic composite profiles which core has a homogeneous foam density.

Another advantage of embodiments of the present invention is that it permits the obtaining of plastic composite profiles having sharp edges and elements of details.

Another advantage of embodiments of the present invention is that it permits the obtaining of plastic composite profiles having a matte surface.

Another advantage of embodiments of the present invention is that the new process involved does not suffer from profile deformation. This is due to the lack of post calibration unit extrusion and therefore the lack of re-heating of the profile once it has gone through the calibration unit. Post co-extrusion requires reheating and easily leads to deformations.

The above objective is accomplished by a method and apparatus according to the present invention.

In a first aspect, the present invention relates to a process for manufacturing a plastic composite profile, of any cross-section, having a foamed core of density lower than 400 Kg/m$^3$ surrounded by an outer layer of density higher than 500 Kg/m$^3$, said process comprising the steps of:

a. Plasticizing a first polymer composition in a first extruder, said first polymer composition comprising a styrenic polymer composition and a first foaming agent in an amount adequate to form a foam having a density lower than 400 Kg/m$^3$ in said core of said plastic composite profile,

b. Plasticizing a second polymer composition in a second extruder, said second polymer composition comprising a styrenic polymer composition, and optionally a second foaming agent in an amount adequate to induce a density higher than 500 Kg/m$^3$ in said outer layer of said plastic composite profile,

c. Feeding the plasticized first and second polymer composition to a coextrusion die so as to form a plastic composite having a core formed of said first composition and an outer layer made of said second polymer composition surrounding said core.

d. Converting said plastic composite into a shaped plastic extrudate by passing said plastic composite through an extrusion head having a die-lip of cross-sectional area and shape adequate for achieving the cross-sectional area and shape of an entrance of a calibration unit at the end of step (f),

e. Contacting said outer layer of said plastic composite with a lubricant downstream from said feeding of said second polymer composition and either before or during conversion step (d),

f. Allowing the core and optionally the outer layer of said shaped plastic extrudate to freely foam over a certain distance (9) adequate for the cross-sectional area and shape of said shaped plastic extrudate to reach the cross-sectional area and shape of said entrance of said calibration unit within a certain tolerance T of the point of entry of said shaped plastic extrudate in said calibration unit, wherein T is ±0.2 cm, and

g. Passing the foamed shaped plastic extrudate obtained at the end of step (f) in said calibration unit, thereby providing said plastic composite profile,

wherein, in the cross-section of the plastic composite profile (8), said outer layer (14) surrounds completely said core (13) of said plastic composite profile (8).

In a second aspect, the present invention relates to an apparatus for implementing the process according to the first aspect. It comprises:

a. A first extruder for plasticizing said first polymer composition,

b. A second extruder for plasticizing said second polymer composition,

c. A coextrusion die connected to the output ends of the first and the second extruder and suitable for providing as output a plastic composite having a core formed from said first composition and an outer layer formed from said second composition,

d. An extrusion head for converting said plastic composite into a shaped plastic extrudate, said extrusion head having an exit die-lip of a first cross-sectional area and a first shape,

e. An input for a lubricant situated downstream of the output of the second extruder and upstream of the exit die-lip of the extrusion head,

f. A calibration unit having an entrance at a certain distance (9) of the extrusion head, said entrance having a second cross-sectional area and a second shape,

wherein said first cross-sectional area and said first shape of said exit die lip as well as said distance (9) are adequate for the cross-sectional area and shape of said shaped plastic extrudate to reach the second cross-sectional area and second shape of said entrance of said calibration unit within a certain tolerance T of the point of entry of said shaped plastic extrudate in said calibration unit, wherein T is ±0.2 cm.

## Brief description of the drawings

Fig. 1 is a schematic illustration of an apparatus according to an embodiment of the second aspect of the present invention during production following a process according to an embodiment of the first aspect of the present invention.

Fig. 2 is a schematic illustration of the cross-section of a plastic composite as obtained at the exit of the coextruder during a process according to an embodiment of the first aspect of the present invention.

Fig. 3 is a schematic illustration of the cross-section of plastic composite profile obtained as the result of a process according to an embodiment of the first aspect of the present invention.

Fig. 4 is a schematic explanation of what means elements of detail or edges having a "radius".

In the different figures, the same reference signs refer to the same or analogous elements.

## Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" means that with respect to the present invention, the only relevant components of the device are A and B.

Similarly, it is to be noticed that the term "coupled", also used herein, should not be interpreted as being restricted to direct connections only. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations offeatures of different embodiments are meant to be within the scope of the invention, and form different embodiments, as would be understood by those in the art. For example, in the following claims, any of the claimed embodiments can be used in any combination. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The first aspect relates to a process for manufacturing a plastic composite profile, of any cross-section, having a foamed core of density lower than 400 Kg/m$^3$ surrounded by an outer layer of density higher than 500 Kg/m$^3$, said process comprising the steps of:

    a. Plasticizing a first polymer composition in a first extruder,
    b. Plasticizing a second polymer composition in a second extruder,
    c. Feeding the plasticized first and second polymer composition to a coextrusion die so as to form a plastic composite having a core formed of said first composition and an outer layer made of said second polymer composition surrounding said core,
    d. Converting said plastic composite into a shaped plastic extrudate by passing said plastic composite through an extrusion head,
    e. Contacting said outer layer of said plastic composite with a lubricant downstream from said feeding of said second polymer composition and either before or during conversion step (d),
    f. Allowing the core and optionally the outer layer of said shaped plastic extrudate to freely foam over a certain distance (9), and
    g. Passing the foamed shaped plastic extrudate obtained at the end of step (f) in said calibration unit, thereby providing said plastic composite profile,

wherein, in the cross-section of the plastic composite profile (8), said outer layer (14) surrounds completely said core (13) of said plastic composite profile (8).

The plastic composite profile of the first aspect preferably includes sharp edges and/or elements of details having small radiuses. In an embodiment, said plastic composite profile may have very sharp elements of detail (D) or edges (E), having a radius R of 1 mm or less.

The profiles produced by the method of the present invention are advantageous because they can be obtained with one or more of the following properties:

-   sharp edges and/or elements of details,
-   a smooth surface,
-   a matte surface.

On another hand, the plastic composite profiles of the first aspect all have an outer layer relatively denser and therefore harder than their core. This provides the profiles with the necessary mechanical properties while making them lighter (and therefore less expensive) than profiles of homogeneous cross-section and comparable hardness. This is also advantageous because less material is used to obtain the same visual effect for a much lower production price on one hand and a lower ecological impact on another hand.

Furthermore, the plastic composite profiles of the first aspect may have a homogeneous foam density and/or may be resistant to delamination.

The manufactured profile has a foamed core and an outer layer.

The foamed core has a density lower than 400 Kg/m$^3$. In embodiments, the density of the core may be below 350 Kg/m$^3$, preferably below 300 Kg/m$^3$, more preferably below 250 Kg/m$^3$, and most preferably below 200 Kg/m$^3$. This is advantageous as a lower core density permits an overall lighter, more economical and more ecological profile.

Typically, the density obtained for the core is above 100 Kg/m$^3$. For instance, it can be from 120 Kg/m$^3$ to 180 Kg/m$^3$.

The foamed structure of the core results from the action of the foaming agent. In embodiments of the present invention, the foamed core obtained by the method of the first aspect may have typically a closed cell structure. The cross-section of the core can be any cross-section.

Due to the process used, the core and the outer layer typically are bound to one another and delaminating in the final profile is avoided. This is a major advantage compared to what is generally observed in e.g. a post co-extrusion process where an outer layer is extruded on an already shaped and cooled extruded core. Without being bound by theory, it is believed that the good bounding of the outer layer on the core is due to some degree of mixing between the first polymer material and the second polymer material at the interface outer layer-core and to the absence of lubricant at the interface core-outer layer.

In the cross-section of the profile, the outer layer surrounds completely the core. Obviously, the core surfaces present at the two extremities of the profile are not covered by the outer layer. This is however not disadvantageous as these surfaces are always hidden in use.

The outer layer has a density higher than 500 Kg/m$^3$. In an embodiment, the outer layer may have a density above 600 Kg/m$^3$, preferably above 700 Kg/m$^3$, yet more preferably above 850 Kg/m$^3$.

Non-foamed polystyrene has a density of about 1050 Kg/m$^3$. The outer layer has therefore preferably a density of about 1050 Kg/m$^3$ or less.

In an embodiment, the outer layer may have a density below 1000 Kg/m$^3$, and more preferably below 950 Kg/m$^3$. An at least slightly foamed outer layer has the advantage to present a matte aspect. A matte aspect provides a nobler touch and visual aspect to a surface, making it more wood-like or plaster-like and less plastic-like.

A slight foaming of the outer layer (e.g. to achieve a density of from 850 to 1000 Kg/m$^3$) is advan-

tageously achieved by using a chemical foaming agent in the composition of the second polymer composition. A chemical foaming agent is more easily dosed to the small amount required.

Where it is present, the outer layer preferably has a thickness of 0.2-0.8 mm.

The first step of the method (step a) comprises plasticizing a first polymer composition in a first extruder. The first polymer composition comprises a styrenic polymer composition and a foaming agent.

Preferred styrenic polymer compositions may comprise or consist of one or more polystyrene polymers, preferably substantially polystyrene (that is, greater than 80 percent by weight) and most preferably are entirely consisting of polystyrene because polystyrene foam is economical, and may form good profiles with smooth surface and sharp edges when used according to embodiments of the present invention. For instance, a general purpose polystyrene (GPPS) is suitable. As another optional feature to any embodiment of the present invention the styrenic polymer composition comprises or consists of one or more polystyrene polymers. The styrenic polymer composition may further include minor proportions of non-styrenic polymers. The styrenic polymer compositions may have a calculated or measured melt flow index of between 1.5 and 18 g/10min, preferably of between 2.5 and 9 g/10min at 200 °C under a load of 5 Kg according to ISO 1133.

As another optional feature to any embodiment of the present invention, the styrenic polymer composition may comprise two or more styrenic polymers of different melt flow indices. This is advantageous because the combining of two polymers having different melt flow indices enables optimisation of the strength of the styrenic polymer foam obtained on one hand and the foamability of the styrenic polymer composition on the other hand.

For instance, the styrenic polymer composition can consist in a blend of a first styrenic polymer having a relatively high melt flow index (MFI) and a second styrenic polymer having a relatively low MFI. The use of such a blend can be advantageous because the lower MFI polymer provides improved strength and/or hardness and the higher MFI polymer is easier to foam and/or permits to obtain profiles with sharper edges and/or sharper details. Playing on the ratio of polymers having different MFI permits therefore to optimize the process and the properties of the obtained foam. The styrenic polymer composition has preferably a calculated or measured (according to ISO 1133, at 200 °C under a load of 5 Kg) melt flow index (MFI) of between 1.5 and 18 g/10min, preferably of between 2.5 and 9 g/10min. In order to calculate the melt flow index of a mixture having two or more components, the following evaluation method can be used if the MFI and the weight fraction of each component is known:

$$Log(MFI_{mixture}) = \sum_{i=1}^{n} W_i Log(MFI_i),$$

wherein $MFI_{mixture}$ is the melt flow index of the mixture, $W_i$ is the weight fraction of component i and $MFI_i$ is the melt flow index of component i.

The Vicat temperature of the styrenic polymer composition is preferably 90 to 110°C, more preferably 95 to 105°C. This is advantageous because these ranges are good compromise between the ease of foaming and the possibility to obtain profiles with sharp edges. With those relatively high Vicat temperatures, stiffness of the cell structure is reached at a relatively high temperature, i.e. fast enough upon cooling to obtain a profile keeping its shape.

The first extruder can be a single extruder or a tandem extruder (i.e. two coupled sub-extruders). The extruder (or each sub-extruder) can comprise one or two screws. If the extruder or one (or both) of the sub-extruders comprise two screws, they can be either co-rotating or counter rotating. One or more dosing units are preferably coupled to the extruder. The dosing units for the styrenic polymer composition, the chemical foaming agent and the optional additives are preferably coupled to the feeder of the extruder while the dosing unit for the foaming agent can be either coupled to the feeder or coupled to an injection port downstream to the feeder. The extruder is preferably divided in several zones controllable in temperature.

The foaming agent present in the first polymer composition is in an amount adequate to form a foam having a density lower than 400 Kg/m³ in said core of said plastic composite profile. This amount is better determined experimentally by trial and errors. This amount will depend on the foaming agent chosen, details of the apparatus and details of the process. For instance, some gas could be lost if the apparatus is not air-tight. Examples of usable foaming agents are physical foaming agent such as $CO_2$, nitrogen and pentane. Chemical foaming agents reacting to form $CO_2$ or nitrogen can also be used alone or in combination with a physical foaming agent. In an embodiment, the first foaming agent may be the physical foaming agent $CO_2$ or a combination of the physical foaming agent $CO_2$ and of a chemical blowing agent releasing $CO_2$.

Adequate amounts of $CO_2$ (as a single physical blowing agent or as a combination of a physical blowing agent and the $CO_2$ released by a chemical blowing agent) are for instance from 0.3 to 3 wt%, preferably 0.4 to 2 wt%, more preferably 0.5 to 1 wt%, and most preferably from 0.5 to 0.8wt% of the polymer composition.

The second step of the method (step b) comprises plasticizing a second polymer composition in a second extruder.

The second styrenic composition can be as described for any embodiment of the first styrenic composition. The first and second polymer compositions may be based on the same styrenic polymer compositions or on different styrenic polymer compositions. In any case, the amount of the second foaming agent is adequate to induce a density as described for any embodiment of the outer layer described above. For instance, the amount of the second foaming agent may be adequate to induce a density higher than 500 Kg/m$^3$ in said outer layer of said plastic composite profile or the amount of the second foaming agent may adequate to induce a density higher than 500 Kg/m$^3$ but lower than 1000 Kg/m$^3$. This amount is better determined experimentally by trial and errors. This amount will depend on the foaming agent chosen, details of the apparatus and details of the process. For instance, some gas could be lost if the apparatus is not air-tight. If the same foaming agent is used in both the first and the second polymer composition, the amount of foaming agent present in the second polymer composition may typically be zero or lower than the amount of foaming agent present in the first polymer composition. In an embodiment, the second foaming agent may be a chemical foaming agent releasing $CO_2$ in an amount adequate to induce a density higher than 500 Kg/m$^3$ in said outer layer of said plastic composite profile. Here also, this amount is best determined experimentally for the same reasons as mentioned above. This amount will depend on the chemical blowing agent used, the details of the apparatus used and the details of the process used.

As a non-limitative example, the inventors have noticed that 0.62 wt% of the chemical blowing agent TRACEL™ NC 7155 is theoretically enough to achieve a density of 500Kg/m$^3$. However, in practice, 0.95 to 1wt% are necessary to achieve a density of 500g/l. 0.62wt% TRACEL™ NC 7155 corresponds to about 0.1 wt% of $CO_2$. The person skilled in the art can use this information to arrive by trial and error to any density he wishes.

In an embodiment, the second foaming agent may be a chemical foaming agent releasing $CO_2$, wherein said $CO_2$ is released in an amount of from 0 to 0.1 wt%, preferably from 0.01 to 0.1 wt%, more preferably from 0.01 to 0.05 wt% calculated on the second polymer composition.

However, the foaming agent does not need to be the same in both the first polymer composition and the second polymer composition.

In an embodiment, the first foaming agent is a physical foaming agent or a combination of a physical foaming agent and a chemical foaming agent, while the second foaming agent may be a chemical foaming agent. This is advantageous because lower densities are easier to achieve with physical foaming agents and the small amount of foaming agent needed for higher densities are more easily dosed by using a chemical foaming agent.

The second extruder can be as described for any embodiment of the first extruder. The second extruder is preferably arranged perpendicularly to the first extruder.

The third step (step c) comprises feeding the output of said first and second extruder to a coextrusion die. The extrusion die is coupled to the output of both extruders and is adapted to provide as output a composite having a cross-section comprising an outer layer and a core. The cross-section can for instance be circular but other shapes are also possible. The coextrusion die is such as to form a plastic composite having a core formed of said first composition and an outer layer made of said second polymer composition.

In an embodiment, the coextrusion die may comprise a body through which an axial bore passes, a nozzle having a central channel which is fed by the first extruder for forming the core of the composite being mounted in said axial bore. That end of the nozzle lying on the output side of the unit has an outer surface which defines, together with an approximately parallel surface of a counter-piece, a passage (e.g. an annular passage), which converges toward the output end, for the skin material. In this embodiment, a hole is provided in the body and emerges in the bore near a groove. This groove is joined to the passage. A piece is engaged in the hole to ensure the supply of the hole with the second polymer composition originating from the second extruder.

In the cross-section of the composite, the outer layer surrounds completely the core.

The fourth step (step d) may comprise converting said plastic composite through an extrusion head having a die-lip of cross-sectional area and shape adequate for achieving the cross-sectional area and shape of a calibration unit at the end of step (f).

In an embodiment, the extrusion head may be adapted to gradually transform the section (e.g. a cylindrical section) of the composite into a section whose shape is the shape desired for the profile's section, while ensuring the presence of the outer layer on all the essential parts of the completed profile.

Preferably, the extrusion head is composed of several stacked extrusion plates, each plate having a die defining a cross-sectional shape which increasingly approaches the desired section for the profile on moving further away from the coextrusion die.

Such an extrusion head is advantageous as it permits to keep the same coextrusion die for many different profile cross-sections. The desired cross-section is achieved by changing the one or more plates of the extrusion head. The extrusion head can be of the kind used to make single material profiles. It does not necessarily need to be adapted for co-extrusion. This is economical. The fifth step (step e) comprises contacting said outer layer of said plastic composite with a lubricant downstream from said feeding of said second polymer composition and either before or during conversion step (d),

The lubricant can be any material reducing friction between the second polymer composition and the walls of the extrusion die. Examples of suitable lubricants are fatty acid amides, polyethylene waxes, styrenic waxes and silicone compounds, amongst others. A preferred lubricant is silicon oil. A lubricant is advantageous because it reduces friction between the inner border of the extrusion head or calibration unit and the outer layer of the profile. Silicon oil is particularly effective in this respect.

The lubricant is preferably introduced in the apparatus in such a way as to lubricate the entire outer surface of the outer layer. In embodiments, it may be introduced close to the exit of the coextrusion die, at the beginning of the extrusion head or between the coextrusion die and the extrusion head.

The sixth step (step f) comprises allowing the core and optionally the outer layer of said shaped plastic extrudate to freely foam over a certain distance (9).

By freely foaming it is meant foaming without contact between the foaming material and any surface of the apparatus. During free-foaming, the cross sectional area of the composite increases. The free foaming distance is defined as the distance between the exit die lip and the entrance of the calibrating unit. This distance is chosen adequate for the cross-sectional area and shape of said shaped plastic extrudate to reach the cross-sectional area and shape of said entrance of said calibration unit either substantially exactly or within a certain tolerance T of the point of entry of said shaped plastic extrudate in said calibration unit. T can for instance be $\pm 0.2$ cm. It is preferably $\pm 0.1$ cm and even more preferably $\pm 0.05$ cm.

In an embodiment, the free foaming distance may be from 5 to 20 cm, preferably 10 to 15 cm. These distance ranges have the advantage to allow enough time for the extrudate to achieve the calibration unit cross sectional area and shape within the tolerance T mentioned above.

The seventh step (step g) comprises passing the foamed shaped plastic extrudate obtained at the end of step (f) in said calibration unit, thereby providing said plastic composite profile.

The expansion of the styrenic polymer foam operates slowly and is preferably controlled by passing the foamed shaped plastic extrudate through a calibration unit, optionally controlled in temperature. In order to reduce friction between the calibration unit and the foaming styrenic polymer, one or more of the following can be done in addition to the use of the lubricant:

    a) the geometry of the calibration unit can preferably be adapted to the changing shape of the die output during foaming,
    b) the foam surface may preferably be kept at a temperature below the Tg of the styrenic polymer,
    c) the calibration unit may be preferably coated on its inside with a low-friction coating.

The calibration unit preferably participates in the cooling of the foamed polymeric mixture. The styrenic polymer foam may also pass through a water bath for cooling purpose. The calibration unit can have parallel walls or can have a smaller cross-section at its exit than at its entry (to accommodate a degree of shrinkage in the profile cross-section due to cooling). One or more calibration unit can be used one after another but at least one calibration unit is used. Typically, a first calibration unit has parallel walls and is followed by smaller calibration units (e.g. in water tanks) having decreasing cross-sections. The formed styrenic polymer foam is most conveniently pulled by e.g. a haul off or any other motorized pulling device known from the person skilled in the art. The haul off preferably comprises pads shaped in such a way as to minimize the contact forces of the pads with the surface of the styrenic polymer foam. The styrenic polymer foam has preferably already a stable geometry before it contacts the pulling device (e.g. the haul off pads). The styrenic polymer foam can then be cut to size with e.g. a saw.

In a second aspect, the present invention relates to an apparatus for implementing the process according to the first aspect. It comprises:

    a. A first extruder for plasticizing said first polymer composition,
    b. A second extruder for plasticizing said second polymer composition,
    c. A coextrusion die connected to the output ends of the first and the second extruder and suitable for providing as output a plastic composite having a core formed from said first composition and an outer layer formed from said second composition,
    d. An extrusion head for converting said plastic composite into a shaped plastic extrudate, said extrusion head having an exit die-lip of a first cross-sectional area and a first shape,
    e. An input for a lubricant situated downstream of the output of the second extruder and upstream of the exit die-lip of the extrusion head,
    f. A calibration unit having an entrance at a certain distance (9) of the extrusion head, said entrance having a second cross-sectional area and a second shape,

wherein said first cross-sectional area and said first shape of said exit die lip as well as said distance (9) are adequate for the cross-sectional area and shape of said shaped plastic extrudate to reach the second cross-sectional area and second shape of said entrance of said calibration unit within a certain tolerance T of the point of entry of said shaped plastic extrudate in said calibration unit, wherein T is $\pm 0.2$ cm.

In an embodiment of the second aspect, the cross-section of the entrance of said calibration unit is 2 to 3 times wider and 5 to 10 times thicker than the cross-section of the exit die-lip.

In an embodiment of the second aspect, the distance (9) may be 5 to 20 cm, preferably 10 to 15 cm.

In an embodiment of the second aspect, the extrusion head is suitable for gradually converting the cross-section of the plastic composite into the cross-section of the exit die-lip.

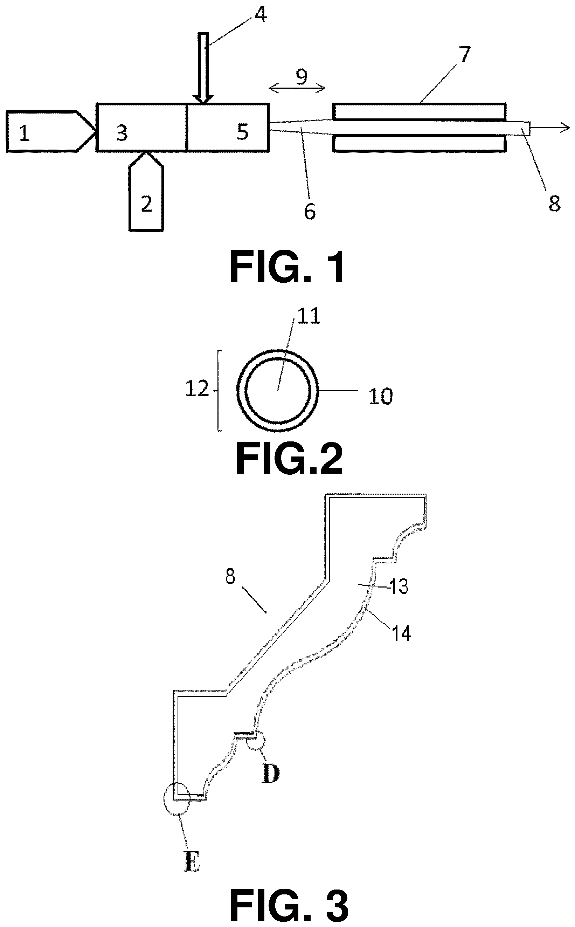

In Fig. 1, a schematic representation of an apparatus according to an embodiment of the second aspect of the present invention is shown. A first extruder (1) and a second extruder (2) are shown connected to a coextrusion die (3). The coextrusion die (3) is adjacent to the extrusion head (5). The arrow (4) shows the point of entry of a lubricant (4). The calibration unit (7) is shown separated from the extrusion head by the free-foaming distance (9).

In operation and according to an embodiment of the present invention, a first polymer composition is plasticized in the first extruder (1) and a second polymer composition is plasticized in the second extruder (2). Next, the outputs of said first (1) and second (2) extruder are fed to a coextrusion die (3) so as to form a plastic composite (12) having a cross-section. An example of cross-section (a circular cross-section) is illustrated in Fig. 2. The plastic composite thereby formed has a core (11) and an outer layer (10).

Next, said plastic composite (12) is converted gradually into a shaped plastic extrudate (6) by passing said plastic composite through an extrusion head (5) comprising a set of adjacent extrusion plates, each plate closer to the exit having a cross-sectional shape closer to the cross-sectional shape of the final profile. The last plate has a die-lip (15) of cross-sectional area and shape adequate (in view of the distance (9)) for the cross-sectional area and shape of said shaped plastic extrudate to reach the cross-sectional area and shape of said entrance of said calibration unit within a certain tolerance T of the point of entry of said shaped plastic extrudate in said calibration unit, wherein T is $\pm 0.2$ cm for achieving the cross-sectional area and shape of the calibration unit (7). The lubricant (4) is injected at the beginning of the extrusion head (5). Once the shaped plastic extrudate (6) leaves the extrusion head (5), it foams freely for a certain distance (9) before to enter the calibration unit (7). When leaving the calibration unit (7), the foamed shaped plastic extrudate now has its definitive shape and is referred to as the plastic composite profile (8).

Fig.3 shows an example of plastic composite profile (8) having a core (13), an outer layer (14) and sharp elements of details (D) and edges (E).

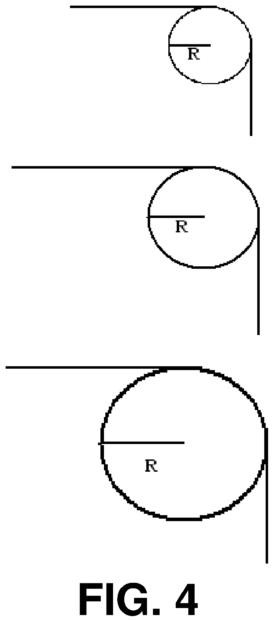

The elements of details (D) and edges (E) obtainable by the present invention may have a radius R of 1 mm or less. The radius of an element of detail or of an edge is evaluated as follow (see Fig. 4): An angle is in theory perfectly sharp and has a radius of zero. In reality, right angles obtained via a manufacture process always appear rounded when observed under sufficient magnification. An angle such as the angle of an edge E or the angle of an element of detail D (see Fig. 3) of a profile can be characterized by the radius R of the circle which curvature equal the curvature of the rounded angle (see Fig 4 for three examples of right angles. From top to bottom, the sharpness decreases and the radius increases). A smaller radius for an element of detail means a sharper detail. A small radius for an edge means a sharp edge.

Particular and preferred aspects of the invention are set out in the accompanying independent and dependent claims. Features from the dependent claims may be combined with features of the independent claims and with features of other dependent claims as appropriate and not merely as explicitly set out in the claims.

## Claims

1. Process for manufacturing a plastic composite profile (8), of any cross-section, having a foamed core (13) of density lower than 400 Kg/m$^3$ surrounded by an outer layer (14) of density higher than 500 Kg/m$^3$, said process comprising the steps of:

   a) plasticizing a first polymer composition in a first extruder (1), said first polymer composition comprising a styrenic polymer composition and a first foaming agent,
   b) plasticizing a second polymer composition in a second extruder (2), said second polymer composition comprising a styrenic polymer composition, and optionally a second foaming agent,
   c) feeding the plasticized first (1) and second (2) polymer composition to a coextrusion die (3) so as to form a plastic composite (12) having a core (11) formed of said first composition and an outer layer (10) made of said second polymer composition surrounding said core (11),
   d) converting said plastic composite (12) into a shaped plastic extrudate (6) by passing said plastic composite through an extrusion head (5) having a die-lip (15) of cross-sectional area and shape adequate for achieving the cross-sectional area and shape of a calibration unit (7) at the end of step (f),
   e) contacting said outer layer (10) of said plastic composite (12) with a lubricant (4) downstream from said feeding of said second polymer composition and either before or during conversion step (d),
   f) allowing the core (13) and optionally the outer layer (14) of said shaped plastic extrudate (6) to freely foam over a distance (9) adequate for the cross-sectional area and shape of said shaped plastic extrudate (6) to reach the cross-sectional area and shape of said calibration unit (7) within a tolerance T of the point of entry of said shaped plastic extrudate (6) in said calibration unit (7), wherein T is $\pm 0.2$ cm, and
   g) passing the foamed shaped plastic extrudate (6) obtained at the end of step (f) in said calibration unit (7),

   thereby providing said plastic composite profile (8), wherein, in the cross-section of the plastic composite profile (8), said outer layer (14) surrounds completely said core (13) of said plastic composite profile (8).

2. The process of claim 1 wherein said lubricant (4) is a silicone oil.

3. The process according to any one of the preceding claims, wherein the free foaming distance (9) is from 5 to 20 cm, or 10 to 15 cm.

4. The process according to any one of the preceding claims, wherein T is $\pm 0.1$ cm, or $\pm 0.05$ cm.

5. The process according to any one of the preceding claims wherein the core has a density below 350 $Kg/m^3$ and preferably below 300 $Kg/m^3$.

6. The process according to any one of the preceding claims, wherein the outer layer has a density above 600 $Kg/m^3$ and below 1000 $Kg/m^3$, preferably above 700 $Kg/m^3$ and below 950 $Kg/m^3$.

7. The process according to any one of the preceding claims, wherein said outer layer (14) of said plastic composite profile (8) has a thickness of 0.2-0.8 mm.

8. The process according to any one of the preceding claims, wherein the core has a density above 100 $Kg/m^3$.

9. The process according to any one of the preceding claims, wherein said first foaming agent is $CO_2$.

10. The process according to claim 9, wherein said $CO_2$ is present in said first polymer composition in an amount of from 0.3 to 3 wt%, preferably 0.4 to 2 wt%, more preferably 0.5 to 1 wt%, and most preferably 0.5-0.8 wt% of the first polymer composition.

11. The process according to any one of the preceding claims, wherein said second foaming agent is a chemical foaming agent releasing $CO_2$ and wherein the amount of chemical foaming agent is such as to release from 0 to 0.1 wt%, preferably 0.01 to 0.1 wt% $CO_2$ calculated on the second polymer composition.

12. The process according to any one of the preceding claims, wherein said plastic composite profile (8) has very sharp elements of detail (D) or edges (E) having a radius R of 1 mm or less.

13. An apparatus for implementing the process according to claim 1, said apparatus comprising:

  a) a first extruder (1) for plasticizing said first polymer composition,
  b) a second extruder (2) for plasticizing said second polymer composition,

c) a coextrusion die (3) connected to the output ends of the first (1) and the second extruder (2) and suitable for providing as output a plastic composite (12) having a core (11) formed from said first composition and an outer layer (10) formed from said second composition,
d) an extrusion head (5) for converting said plastic composite (12) into a shaped plastic extrudate (6), said extrusion head having an exit die-lip (15) of a first cross-sectional area and a first shape,
e) an input for a lubricant (4) situated downstream of the output of the second extruder (2) and upstream of the exit die-lip (15) of the extrusion head (5),
f) a calibration unit (7) having an entrance at a distance (9) of the extrusion head (5), said entrance having a second cross-sectional area and a second shape,

wherein said first cross-sectional area and said first shape of said exit die lip as well as said distance (9) are adequate for the cross-sectional area and shape of said shaped plastic extrudate (6) to reach the second cross-sectional area and second shape of said entrance of said calibration unit (7) within a tolerance T of the point of entry of said shaped plastic extrudate (6) in said calibration unit (7), wherein T is $\pm 0.2$ cm.

14. The apparatus according to claim 13, wherein the cross-section of the entrance of said calibration unit (7) is 2 to 3 times wider and 5 to 10 times thicker than the cross-section of the exit die-lip (15).

15. The apparatus according to claim 13 or 14, wherein said distance (9) is 5 to 20 cm, or 10 to 15 cm.

**Patentansprüche**

1. Verfahren zur Herstellung eines Kunststoffverbundmaterialprofils (8) mit beliebigem Querschnitt, das einen geschäumten Kern (13) mit einer Dichte von weniger als 400 $Kg/m^3$ aufweist, der von einer Außenschicht (14) mit einer Dichte von mehr als 500 $Kg/m^3$ umgeben ist, wobei das Verfahren die folgenden Schritte umfasst:

  a) Plastifizieren einer ersten Polymerzusammensetzung in einem ersten Extruder (1), wobei die erste Polymerzusammensetzung eine Styrol-Polymerzusammensetzung und ein erstes Schaummittel umfasst,
  b) Plastifizieren einer zweiten Polymerzusammensetzung in einem zweiten Extruder (2), wobei die zweite Polymerzusammensetzung eine Styrol-Polymerzusammensetzung und optional ein zweites Schaummittel umfasst,

c) Einspeisen der plastifizierten ersten (1) und zweiten (2) Polymerzusammensetzung in eine Koextrusiondüse (3), um ein Kunststoffverbundmaterial (12) zu bilden, das einen Kern (11), der aus der ersten Zusammensetzung gebildet ist, und eine Außenschicht (10), die aus der den Kern (11) umgebenden zweiten Polymerzusammensetzung hergestellt ist, aufweist,

d) Umwandeln des Kunststoffverbundmaterials (12) in ein geformtes Kunststoffextrudat (6), indem das Kunststoffverbundmaterial durch einen Extrusionskopf (5) geleitet wird, der eine Düsenlippe (15) mit einer Querschnittsfläche und einer Form aufweist, die dafür geeignet sind, am Ende des Schritts (f) die Querschnittsfläche und Form einer Kalibriereinheit (7) zu erreichen,

e) Inkontaktbringen der Außenschicht (10) des Kunststoffverbundmaterials (12) mit einem Gleitmittel (4) stromabwärts von der Einspeisung der zweiten Polymerzusammensetzung und entweder vor oder während des Umwandlungsschritts (d),

f) Ermöglichen, dass der Kern (13) und optional die Außenschicht (14) des geformten Kunststoffextrudats (6) frei über eine Entfernung (9) schäumt, die dafür geeignet ist, dass die Querschnittsfläche und Form des geformten Kunststoffextrudats (6) innerhalb einer Toleranz T des Eintrittspunkts des geformten Kunststoffextrudats (6) in die Kalibriereinheit (7) die Querschnittsfläche und Form der Kalibriereinheit (7) erreicht, wobei T $\pm$ 0,2 cm beträgt, und

g) Leiten des geschäumten geformten Kunststoffextrudats (6), das am Ende des Schritts (f) erhalten wird, in die Kalibriereinheit (7),

wodurch das Kunststoffverbundmaterialprofil (8) bereitgestellt wird, wobei im Querschnitt des Kunststoffverbundmaterialprofils (8) die Außenschicht (14) den Kern (13) des Kunststoffverbundmaterialprofils (8) vollständig umgibt.

2. Verfahren nach Anspruch 1, wobei das Gleitmittel (4) ein Silikonöl ist.

3. Verfahren nach einem der vorhergehenden Ansprüche, wobei die freie Schäumentfernung (9) von 5 bis 20 cm oder 10 bis 15 cm beträgt.

4. Verfahren nach einem der vorhergehenden Ansprüche, wobei T $\pm$ 0,1 cm oder $\pm$ 0,05 cm beträgt.

5. Verfahren nach einem der vorhergehenden Ansprüche, wobei der Kern eine Dichte von unter 350 Kg/m$^3$ und vorzugsweise unter 300 Kg/m$^3$ aufweist.

6. Verfahren nach einem der vorhergehenden Ansprüche, wobei die Außenschicht eine Dichte von über 600 Kg/m$^3$ und unter 1000 Kg/m$^3$, vorzugsweise über 700 Kg/m$^3$ und unter 950 Kg/m$^3$ aufweist.

7. Verfahren nach einem der vorhergehenden Ansprüche, wobei die Außenschicht (14) des Kunststoffverbundmaterialprofils (8) eine Dicke von 0,2 bis 0,8 mm aufweist.

8. Verfahren nach einem der vorhergehenden Ansprüche, wobei der Kern eine Dichte von über 100 Kg/m$^3$ aufweist.

9. Verfahren nach einem der vorhergehenden Ansprüche, wobei das erste Schaummittel $CO_2$ ist.

10. Verfahren nach Anspruch 9, wobei das $CO_2$ in der ersten Polymerzusammensetzung in einer Menge von 0,3 bis 3 Gew.-%, vorzugsweise 0,4 bis 2 Gew.-%, stärker bevorzugt 0,5 bis 1 Gew.-% und am meisten bevorzugt 0,5 bis 0,8 Gew.-% der ersten Polymerzusammensetzung vorhanden ist.

11. Verfahren nach einem der vorhergehenden Ansprüche, wobei das zweite Schaummittel ein chemisches Schaummittel ist, das $CO_2$ freisetzt, und wobei die Menge des chemischen Schaummittels derart ist, dass es von 0 bis 0,1 Gew.-%, vorzugsweise 0,01 bis 0,1 Gew.-% $CO_2$, berechnet anhand der zweiten Polymerzusammensetzung, freisetzt.

12. Verfahren nach einem der vorhergehenden Ansprüche, wobei das Kunststoffverbundmaterialprofil (8) sehr scharfe Detailelemente (D) oder Kanten (E) aufweist, die einen Radius R von 1 mm oder weniger aufweisen.

13. Vorrichtung zur Umsetzung des Verfahrens nach Anspruch 1, wobei die Vorrichtung umfasst:

a) einen ersten Extruder (1) zum Plastifizieren der ersten Polymerzusammensetzung,
b) einen zweiten Extruder (2) zum Plastifizieren der zweiten Polymerzusammensetzung,
c) eine Koextrusionsdüse (3), die mit den Ausgangsenden des ersten (1) und des zweiten Extruders (2) verbunden ist und dafür geeignet ist, als Ausgang ein Kunststoffverbundmaterial (12) bereitzustellen, das einen aus der ersten Zusammensetzung gebildeten Kern (11) und eine aus der zweiten Zusammensetzung gebildete Außenschicht (10) aufweist,
d) einen Extrusionskopf (5) zum Umwandeln des Kunststoffverbundmaterials (12) in ein geformtes Kunststoffextrudat (6), wobei der Extrusionskopf eine Austritts-Düsenlippe (15) mit einer ersten Querschnittsfläche und einer ersten Form aufweist,

e) einen Eingang für ein Gleitmittel (4), der stromabwärts von dem Ausgang des zweiten Extruders (2) und stromaufwärts von der Austritts-Düsenlippe (15) des Extrusionskopfs (5) angeordnet ist,
f) eine Kalibriereinheit (7), die einen Einlass in einer Entfernung (9) von dem Extrusionskopf (5) aufweist, wobei der Einlass eine zweite Querschnittsfläche und eine zweite Form aufweist, wobei die erste Querschnittsfläche und die erste Form der Austritts-Düsenlippe sowie die Entfernung (9) dafür geeignet sind, dass die Querschnittsfläche und die Form des geformten Kunststoffextrudats (6) die zweite Querschnittsfläche und die zweite Form des Einlasses der Kalibriereinheit (7) innerhalb einer Toleranz T des Eintrittspunkts des geformten Kunststoffextrudats (6) in die Kalibriereinheit (7) erreicht, wobei T ± 0,2 cm beträgt.

14. Vorrichtung nach Anspruch 13, wobei der Querschnitt des Einlasses der Kalibriereinheit (7) 2 bis 3 Mal breiter und 5 bis 10 Mal dicker als der Querschnitt der Austritts-Düsenlippe (15) ist.

15. Verfahren nach Anspruch 13 oder 14, wobei die Entfernung (9) 5 bis 20 cm oder 10 bis 15 cm beträgt.

**Revendications**

1. Processus pour fabriquer un profilé composite de plastique (8), de n'importe quelle section transversale, ayant une âme de mousse solide (13) de densité inférieure à 400 kg/m$^3$ entourée par une couche extérieure (14) de densité supérieure à 500 kg/m$^3$, ledit processus comprenant les étapes consistant à :

a) plastifier une première composition de polymère dans une première extrudeuse (1), ladite première composition de polymère comprenant une composition de polymère styrénique et un premier agent de moussage,
b) plastifier une seconde composition de polymère dans une seconde extrudeuse (2), ladite seconde composition de polymère comprenant une composition de polymère styrénique et optionnellement un second agent de moussage,
c) amener la première (1) et la seconde (2) composition de polymère plastifiée à une filière de coextrusion (3) afin de former un composite de plastique (12) ayant une âme (11) formée de ladite première composition et d'une couche extérieure (10) faite de ladite seconde composition de polymère entourant ladite âme (11),
d) transformer ledit composite de plastique (12) en un extrudat de plastique mis en forme (6) en passant ledit composite de plastique à travers une tête d'extrusion (5) ayant un rebord de filière (15) de forme et de surface en coupe transversale adéquates pour parvenir à la forme et à la surface en coupe transversale d'une unité d'étalonnage (7) à la fin de l'étape (f),
e) mettre en contact ladite couche extérieure (10) dudit composite de plastique (12) avec un lubrifiant (4) en aval de ladite alimentation de ladite seconde composition de polymère et soit avant soit pendant l'étape de transformation (d),
f) permettre à l'âme (13) et optionnellement à la couche extérieure (14) dudit extrudat de plastique mis en forme (6) pour librement subir du moussage sur une distance (9) adéquate pour que la forme et la surface en coupe transversale dudit extrudat de plastique mis en forme (6) atteignent la forme et la surface en coupe transversale de ladite unité d'étalonnage (7) dans les limites d'une tolérance T du point d'entrée dudit extrudat de plastique mis en forme (6) dans ladite unité d'étalonnage (7), dans laquelle T vaut ± 0,2 cm, et
g) passer l'extrudat de plastique de mousse solide mis en forme (6) obtenu à la fin de l'étape (f) dans ladite unité d'étalonnage (7),

fournissant de ce fait ledit profilé composite de plastique (8), dans lequel, dans la section transversale du profilé composite de plastique (8), ladite couche extérieure (14) entoure complètement ladite âme (13) dudit profil composite de plastique (8).

2. Processus selon la revendication 1, dans lequel ledit lubrifiant (4) est une huile de silicone.

3. Processus selon l'une quelconque des revendications précédentes, dans lequel la distance de moussage libre (9) est de 5 à 20 cm, ou de 10 à 15 cm.

4. Processus selon l'une quelconque des revendications précédentes, dans lequel T vaut ± 0,1 cm, ou ± 0,05 cm.

5. Processus selon l'une quelconque des revendications précédentes, dans lequel l'âme a une densité inférieure à 350 kg/m$^3$ et de préférence inférieure à 300 kg/m$^3$.

6. Processus selon l'une quelconque des revendications précédentes, dans lequel la couche extérieure a une densité supérieure à 600 kg/m$^3$ et inférieure à 1000 kg/m$^3$, de préférence supérieure à 700 kg/m$^3$ et inférieure à 950 kg/m$^3$.

7. Processus selon l'une quelconque des revendications précédentes, dans lequel ladite couche extérieure (14) dudit profilé composite de plastique (8) a une épaisseur de 0,2 à 0,8 mm.

**8.** Processus selon l'une quelconque des revendications précédentes, dans lequel l'âme a une densité supérieure à 100 kg/m$^3$.

**9.** Processus selon l'une quelconque des revendications précédentes, dans lequel ledit premier agent de moussage est du $CO_2$.

**10.** Processus selon la revendication 9, dans lequel ledit $CO_2$ est présent dans ladite première composition de polymère en une quantité de 0,3 à 3 % en poids, de préférence 0,4 à 2 % en poids, plus de préférence 0,5 à 1 % en poids et le plus de préférence 0,5 à 0,8 % en poids de la première composition de polymère.

**11.** Processus selon l'une quelconque des revendications précédentes, dans lequel ledit second agent de moussage est un agent de moussage chimique libérant du $CO_2$ et dans lequel la quantité d'agent de moussage chimique est de sorte à libérer de 0 à 0,1 % en poids, de préférence 0,01 à 0,1 % en poids de $CO_2$ calculé sur la seconde composition de polymère.

**12.** Processus selon l'une quelconque des revendications précédentes, dans lequel ledit profilé composite de plastique (8) a des éléments de détail (D) ou des bords (E) très pointus ayant un rayon R de 1 mm ou moins.

**13.** Appareil pour mettre en oeuvre le processus selon la revendication 1, ledit appareil comprenant :

> a) une première extrudeuse (1) pour plastifier ladite première composition de polymère,
> b) une seconde extrudeuse (2) pour plastifier ladite seconde composition de polymère,
> c) une filière de coextrusion (3) reliée aux extrémités de sortie de la première (1) et de la seconde extrudeuse (2) et appropriée pour fournir en tant que sortie un composite de plastique (12) ayant une âme (11) formée à partir de ladite première composition et d'une couche extérieure (10) formée à partir de ladite seconde composition,
> d) une tête d'extrusion (5) pour transformer ledit composite de plastique (12) en un extrudat de plastique mis en forme (6), ladite tête d'extrusion ayant un rebord de filière de sortie (15) d'une première forme et d'une première surface en coupe transversale,
> e) une entrée pour un lubrifiant (4) située en aval de la sortie de la seconde extrudeuse (2) et en amont du rebord de filière de sortie (15) de la tête d'extrusion (5),
> f) une unité d'étalonnage (7) ayant une entrée à une certaine distance (9) de la tête d'extrusion (5), ladite entrée ayant une seconde forme et une seconde surface en coupe transversale, dans laquelle ladite première forme et ladite première surface en coupe transversale dudit rebord de filière de sortie aussi bien que ladite distance (9) sont adéquates pour la forme et la surface en coupe transversale dudit extrudat de plastique mis en forme (6) pour atteindre la seconde forme et la seconde surface en coupe transversale de ladite entrée de ladite unité d'étalonnage (7) dans les limites d'une tolérance T du point d'entrée dudit extrudat de plastique mis en forme (6) dans ladite unité d'étalonnage (7), dans laquelle T vaut $\pm$ 0,2 cm.

**14.** Appareil selon la revendication 13, dans lequel la section transversale de l'entrée de ladite unité d'étalonnage (7) est 2 à 3 fois plus large et 5 à 10 fois plus épaisse que la section transversale du rebord de filière de sortie (15).

**15.** Appareil selon la revendication 13 ou 14, dans lequel ladite distance (9) est de 5 à 20 cm, ou de 10 à 15 cm.

FIG. 1

FIG.2

FIG. 3

# FIG. 4

**EP 2 634 210 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 1439438 A
- EP 1484149 A
- DE 4432111 A
- US 5360281 A